# EUROPÄISCHE PATENTSCHRIFT

(11) **EP 3 202 567 B1**
(45) Veröffentlichungstag und Bekanntmachung des Hinweises auf die Patenterteilung: **15.07.2020**
(21) Anmeldenummer: 16002680.3
(22) Anmeldetag: 19.12.2016
(51) Int. Cl.: B32B 3/06, B32B 3/26, B32B 3/30, B32B 7/03, B32B 21/04, E04C 2/26, E04C 2/40, B32B 13/10, B32B 13/12, E04B 5/23, E04C 3/29, B32B 7/12

(54) **VERFAHREN ZUR HERSTELLUNG EINES ALS HOLZ-BETON-VERBUND AUSGEBILDETEN BAUELEMENTS**
METHOD FOR PRODUCING A WOOD-CONCRETE COMPOSITE AS BUILDING ELEMENT
PROCÉDÉ DE PRODUCTION D'UN COMPOSITE BOIS/BÉTON COMME ÉLÉMENT DE CONSTRUCTION

(30) Priorität: 03.02.2016 DE 102016001183
(43) Veröffentlichungstag der Anmeldung: 09.08.2017
(73) Patentinhaber: Lignotrend GmbH & Co. KG, 79809 Weilheim (DE)
(72) Erfinder: Eckert, Ralph, 79774 Albbruck-Buch (DE)
(74) Vertreter: Börjes-Pestalozza, Henrich

(56) Entgegenhaltungen:
- EP-A2- 1 992 754
- DE-A1- 4 420 175
- DE-A1- 19 729 058
- DE-U1-202009 004 335
- DE-U1-202013 001 849

## Beschreibung

Die Erfindung betrifft ein Verfahren zur Herstellung eines als Holz-Beton-Verbund (HBV) ausgebildeten Bauelementes, das eine unterseitige Holzscheibe hat sowie im oberen Bereich eine Betonplatte aufweist, wobei zwischen der Holzscheibe und der Betonplatte eine Kunstharzschicht aus in Kunstharz eingebettetem Granulat angeordnet ist, wobei die unterseitige Holzscheibe in einem ersten Verfahrensschritt mit der Kunstharzschicht beschichtet wird und wobei auf diese, eine rauhe Oberflächenstruktur aufweisende Kunstharzschicht die Betonplatte (3) aufgebracht ist.

Flächige Bauelemente aus einem Holz-Beton-Verbund (HBV) werden bereits in verschiedenen Versionen hergestellt und verbaut. Bei den vorbekannten Bauweisen werden die Schubkräfte von der Betonplatte über Schrauben, Schub- oder Lochbleche sowie über Kerven auf die als Basiselement dienende und die Zugkräfte aufnehmende Holzscheibe übertragen. Es sind auch bereits Ausführungen bekannt, bei denen die Schubkräfte mittels rechteckig angeordneter Ausplattungen im Holz in die Holzscheibe eingeleitet werden. Alle vorbekannten Lösungen bergen jedoch die Gefahr, dass die oberseitige Ausbildung der als Basiselement dienenden Holzscheibe diese nicht mit Sicherheit vor dem Eindringen von Regenwasser während der Bauzeit schützt, was aber bei sichtbaren Unteransichten und unterhalb der Holzscheibe angebrachten Akustikabsorbern zu katastrophalen Bauschäden während der Bauzeit führen kann.

Aus der DE 197 29 058 A1 kennt man bereits ein Bauelement, das als Holz-Beton-Verbund (HBV) ausgebildet ist und an seiner Unterseite eine Holzscheibe sowie im oberen Bereich eine Betonplatte aufweist. Um eine Belastbarkeit dieses Holz-Beton-Verbundes zu erreichen, wird auf die Holzscheibe zunächst ein Klebstoff in pastöser Konsistenz unter Bildung der Klebstoffschicht flächendeckend aufgetragen, bevor anschließend auf diese Klebstoffschicht hydraulischer Frischbeton oder Frischmörtel aufgegossen und unter Bildung einer Beton- oder Mörtelschicht flächendeckend auf der Klebstoffschicht verteilt wird. Dabei werden die Klebstoffschicht und die Beton- oder Mörtelschicht in einer zeitweilig gemeinsamen Aushärtphase unter Erzeugung einer großflächigen Verbindung zwischen den beiden Schichten zur Aushärtung gebracht. Da die Beton- oder Mörtelschicht auf die Klebstoffschicht aufgegossen wird, solange diese noch nicht ausgehärtet ist, kommt es zu einem Eindringen von gröberen Bestandteilen der Beton- oder Mörtelschicht in die Klebstoffschicht beziehungsweise zu einer gewissen Durchmischung der beiden Schichten, wodurch sich nach dem Aushärten beider Schichten eine über die gesamte Fläche wirksame haftvermittelnde Verzahnung ergibt. Diese zeitweise gemeinsame Aushärtphase setzt die Fertigstellung des vorbekannten Holz-Beton-Verbundes im Werk voraus. Eine solche gemeinsame Aushärtphase lässt sich nämlich an der Baustelle nur erreichen, wenn das Holz vorgetrocknet und das Kunstharz unter klimatisierten Bedingungen aufgetragen wird. Dazu wäre es notwendig, dass das Kunstharz auf der Baustelle unter einem Zelt aufgetragen wird und dass im Zelt ein Klimagerät vorhanden ist. Wird demgegenüber, wie in DE 197 29 058 A1 vorgesehen, das Kunstharz und der Beton im Werk aufgetragen, ist das derart beschwerte Holzbauelement nur noch mit großem Aufwand an die Baustelle zu transportieren.

Aus der DE 20 2013 001 849 U1 kennt man bereits ein Holzbauelement, das als Holz-Beton-Verbund ausgebildet ist und einen balkenförmigen Holzträger hat, auf dem oberseitig eine Schicht aus Ortbeton aufgebracht ist. Der balkenförmige Holzträger weist oberseitige Einformungen auf, welche von der Schicht aus Ortbeton ausgefüllt sind. Das vorbekannte Holzbauelement weist oberseitig segezahnförmige Schubknaggen oder Schubzähne auf, deren den Schubkräften entgegenwirkenden Knaggen- oder Zahnbrüste einander zugewandt sind. Da die Knagge- oder Zahnbrüste der Schubknaggen oder Schubzähe einander zugewandt sind, kann sich der dazwischen liegende Teilbereich der Betonplatte dazwischen verstämmen und abstützten. An dem vorbekannten Holzbauelement ist oberseitig mindestens eine Längsnut vorgesehen, die in Längsrichtung des Holzbauelementes orientiert ist. Da ein solches Holzbauelement stets zunächst mit einer gewissen Überhöhung eingebaut wird, bevor es unter der Last des Betons sich in einer horizontalen Ebene verspannt und ausrichtet, erstreckt sich die Längsnut bogenförmig über das überhöhte Holzbauelement derart, dass beispielsweise durch einen Regenschauer aufgebrachtes Wasser von der Mitte des Holzbauelementes aus in entgegengesetzte Richtungen zu den Stirnenden hin abfließen kann, bevor eine auf dem Holzbauelement stehende Wassermenge in das Holzbauelement einsickern und später zu Bauschäden führen kann. Dabei kann das vorbekannte Holzbauelement zusätzlich eine oberseitige Wasserschutzschicht tragen, damit ein Wassereintrag in das Holzbauelement auch unter ungünstigen Wetterbedingungen vermieden wird. Bei dem vorbekannten Holzbauelement wird ein gewisser Wetterschutz durch den überhöhten Einbau des Holzbauelement und durch die auf das Holzbauelement aufgetragene Wasserschutzschicht erreicht; eine flächige feste Verbindung zwischen dem untenliegenden Holzträger einerseits und der darüber liegenden Schicht aus Ortbeton andererseits wird in der DE 20 2013 001 849 U1 demgegenüber nicht angesprochen; vielmehr wirkt die auf den Holzträger aufgebrachte Wasserschutzschicht einer festen Verbindung zwischen dem Holzträger einerseits und der darauf aus Ortbeton aufgebrachten Betonschicht andererseits eher entgegen.

Aus der DE 4420175 A1 kennt man bereits eine Beton-Verbundplatte für eine Deckenkonstruktion, für die Deckenkonstruktion eines Gebäudes. Die vorbekannte Beton-Verbundplatte weist eine Schichtholzplatte auf, auf die eine Betonplatte aufgegossen ist. Auf ihrer der Betonplatte zugewandten Flachseite hat die Schichtholzplatte eine aus erhabenen Seitenbereichen und vertieften Flachseitenbereichen bestehende Oberflächenstruktur, in die der Beton der darüber liegenden Betonplatte eingreift, so dass die Schichtholzplatte schubkraftfest mit der Betonplatte verbunden ist und die in der Betonplatte auftretenden Zugkräfte aufgenommen werden. Dabei ist vorgesehen, dass die oben liegende Betonplatte aus Ortbeton hergestellt wird. Um eine Durchfeuchtung der Schichtholzplatte beim Aufgießen der Betonplatte zu verhindern, ist bei der Herstellung der vorbekannten Beton-Verbundplatte vorgesehen, dass die der Betonplatte zugewandte Flachseite der Schichtholzplatte zumindest in erhabenen Flachseitenbereichen im Wesentlichen vollständig mit einer feuchtigkeitsdichten Schicht beschichtet ist. Auch bei dieser vorbekannten Beton-Verbundplatte wird die Verbindung zwischen der unten liegenden Schichtholzplatte und der darauf aufgetragenen Betonplatte durch die in die Schichtholzplatte eingearbeitete Oberflächenstruktur bewerkstelligt. Das Einarbeiten dieser Oberflächenstruktur in die Schichtholzplatte erfordert jedoch einen zusätzlichen, nicht unerheblichen Herstellungsaufwand, - zudem verhindert diese Oberflächenstruktur ein ungehindertes Abfließen von oberflächlich angesammeltem Regenwasser von der zunächst noch ohne die Betonplatte versehenen Schichtholzplatte.

Aus der DE 20 2009 004 335 U1 kennt man ein zweischaliges Verbundbauteil, das aus einem Holzträgerelement mit darin ausgebildeten Kerven als Zugbauteil und einem Betonträgerelement als Druckbauteil besteht. Um hohe Kräfte zwischen den Schichten des vorbekannten Verbundbauteils zu übertragen, sind an dem Betonträgerelement Ansätze angeformt, die in die Kerven des Holzträgerelements mit Spiel eingreifen. Dabei wird der durch das Spiel vorgegebene Hohlraum zwischen den Ansätzen und den Kerven durch ein Vergussmittel ausgefüllt. Bei dem vorbekannten Verbundbauteil werden das Holzträgerelement und das Betonträgerelement vorzugsweise getrennt vorgefertigt und auf die Baustelle transportiert, bevor nach dem Zusammensetzen dieser Bestandteile das Verbundmittel eingefüllt wird. Der Transport des Holzträgerelements und des Betonträgerelements auf die Baustelle ist jedoch mit einem erheblichem logistischen Aufwand verbunden. Darüber hinaus kann sich ein lagegerechtes Positionieren des Betonträgerelements auf dem Holzträgerelement schwierig gestalten, wenn die an den Betonträgerelement vorgesehenen Ansätze in die Kerven des Holzträgerelementes eingreifen sollen.

Es besteht daher die Aufgabe, ein Verfahren der eingangs erwähnten Art zu schaffen, das während der Bauphase und noch vor Aufbringen einer plattenförmigen Betonschicht einen verbesserten Schutz gegen das Eindringen von Wasser in die Holzscheibe bietet und sich nach Fertigstellung durch einen hochbelastbaren Verbund der als Basiselement dienenden Holzscheibe sowie der darauf aufgebrachten Betonplatte auszeichnet.

Die erfindungsgemäße Lösung dieser Aufgabe besteht bei dem Verfahren der eingangs erwähnten Art darin, dass nach dem flächigen Auftragen der Kunstharzschicht auf die Holzscheibe das Granulat eingestreut wird, welches der Kunstharzschicht die rauhe Oberflächenstruktur gibt, und dass nach dem Aushärten der aus in Kunstharz eingebettetem Granulat bestehenden und die Holzscheibe oberflächlich wasserdicht versiegelnden Kunstharzschicht die plattenförmige Betonschicht aus Ortbeton aufgebracht wird
Das erfindungsgemäße Verfahren betrifft die Herstellung eines als Holz-Beton-Verbund (HBV) ausgebildeten Bauelementes. Dieses Bauelement weist an seiner Unterseite eine flächige Holzscheibe und in seinem oberen Bereich eine Betonplatte auf. Während die Holzscheibe des erfindungsgemäßen Bauelementes die Zugkräfte und die Gestaltung der Unteransicht übernimmt, ist die im oberen Bereich des Bauelementes vorgesehene Betonplatte dazu bestimmt, die Druck- und Scheibenkräfte zu übernehmen. Dabei ist die Holzscheibe flächig mit einer Schicht aus in Kunstharz eingebettetem Granulat verbunden. Das Granulat gibt der auf die Holzscheibe aufgebrachten Kunstharzschicht, die zwischen der Holzscheibe und der Betonplatte angeordnet ist, eine rauhe Oberflächenstruktur. Die zwischen der Holzscheibe und der Betonplatte auftretenden Schubkräfte werden somit über die oberflächlich rauhe Kunstharzschicht und das darin eingebettete Granulat, das beispielsweise Splitt sein kann, in die zugaufnehmende Holzscheibe eingeleitet. Dabei werden die günstigen Materialeigenschaften des aus Holz hergestellten scheibenförmigen Basiselementes vollständig genutzt und die als Basiselement dienende Holzscheibe kann mit seiner gesamten Oberfläche zur Schubkraftübertragung genutzt werden. Die nach Aufbringen des Betons gebildete druckaufnehmende Betonplatte verankert sich kontinuierlich in dem Granulat und nimmt die bei dieser Bauweise gar nicht oder nur sehr gering auftretenden abhebenden Querzugkräfte ebenfalls mit auf. Das erfindungsgemäße Verfahren sieht nun vor, dass nach dem flächigen Auftragen der Kunstharzschicht auf die Holzscheibe das Granulat eingestreut wird, welches der Kunstharzschicht die rauhe Oberflächenstruktur gibt, und dass nach dem Aushärten der aus in Kunstharz eingebettetem Granulat bestehenden und die Holzscheibe oberflächlich wasserdicht versiegelnden Kunstharzschicht die plattenförmige Betonschicht aus Ortbeton aufgebracht wird. Da die flächig auf die Holzscheibe aufgetragene Kunstharzschicht die Holzscheibe oberflächlich wasserdicht versiegelt, ist die Holzscheibe bereits während der Bauphase witterungsbeständig und wasserunempfindlich. Durch das Aufkleben der beispielsweise auch als Kunstharzleim ausgestalteten Kunstharzschicht und das darin eingestreute Granulat bildet sich aus der Beton-Druckzone und der Holz-Zugzone ein hochbelastbarer starrer Verbund, wobei eine sehr geringe Rückverformung der planmäßigen Überhöhung des beispielsweise als Holz-Beton-Verbunddecke dienenden fertigen Bauelementes zu erwarten ist und die Kosten für Querzugverankerungen eingespart werden können. Die auf der Holzscheibe aufgebrachte Kunstharzschicht schützt die Holzscheibe auch von einer unerwünschten Feuchtigkeitsaufnahme bei dem zur Erstellung der Betonplatte erforderlichen Betoniervorgang sowohl bei der Vormontage im Werk als auch auf der Baustelle. Dabei wird ein Quellen und späteres Schwinden der Holzscheibe nach der Austrockungsphase des Betons vermieden und die Holzscheibe bleibt rissefrei. Weiterbildungen gemäß der Erfindung ergeben sich aus der nachfolgenden Beschreibung bevorzugter Ausführungsbeispiele in Verbindung mit den Ansprüchen sowie der Zeichnung. Nachstehend wird die Erfindung anhand besonders vorteilhafter Ausführungsbeispiele noch näher beschrieben.

Es zeigt:

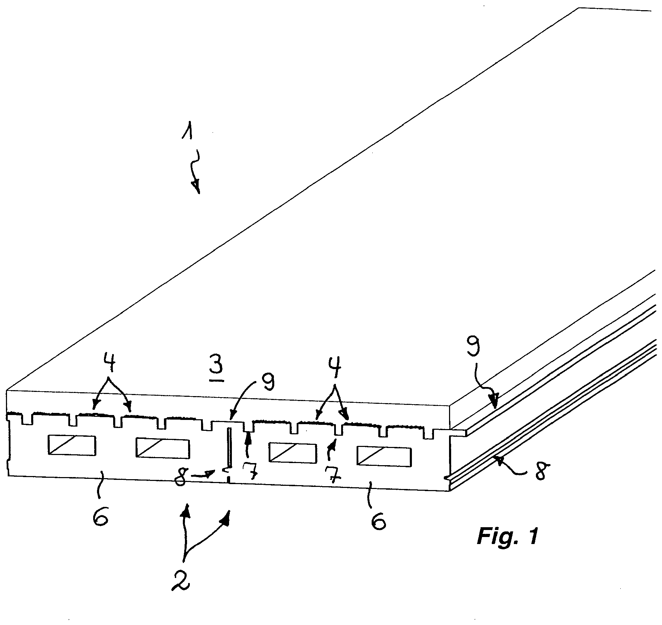

- Fig. 1: ein als Holz-Beton-Verbund ausgebildetes und als Deckenelement dienendes Bauelement in einer perspektivischen Seitenansicht, wobei das hier dargestellte Bauelement eine aus mehreren aneinander anliegenden Holzscheibenelementen gebildete und an der Unterseite des Bauelementes vorgesehene Holzscheibe sowie im oberen Bereich des Bauelementes eine vorzugsweise aus Ortbeton hergestellte Betonplatte aufweist, wobei zwischen der unteren Holzscheibe und der oberen Betonplatte eine auf die Holzscheibe aufgetragene Kunstharzschicht vorgesehen ist, in die ein Granulat derart eingestreut wurde, dass diese Kunstharzschicht eine rauhe Oberfläche aufweist,

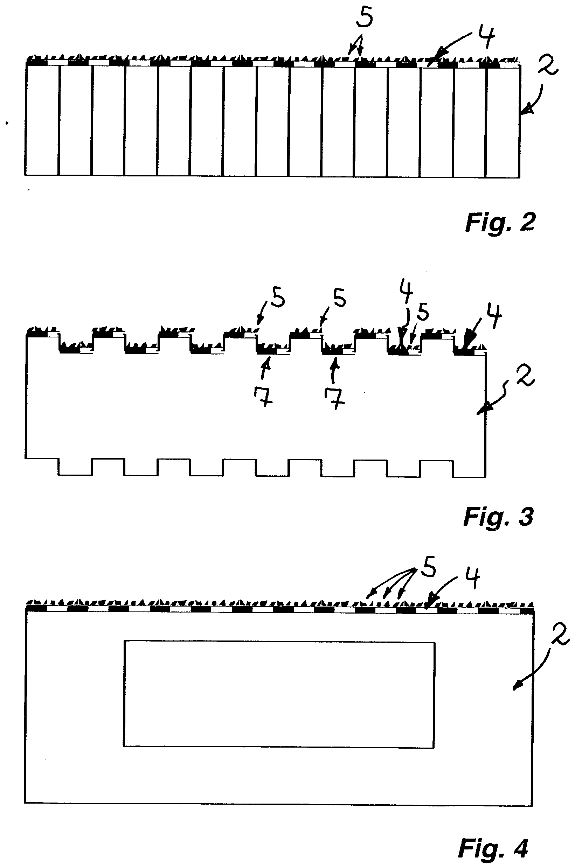

- Fig. 2: eine als Basiselement des in Figur 1 gezeigten Bauelementes dienende und hier in einer Seitenansicht gezeigte Holzscheibe, die aus flachseitig aneinander anliegenden und miteinander verleimten Holzbohlen gebildet ist, wobei die obere Scheibenflachseite der Holzscheibe eine Kunstharzschicht aufgetragen ist, in die ein Granulat eingestreut wurde, dass der Kunstharzschicht eine rauhe Oberfläche gibt,
- Fig. 3: eine ebenfalls in einer Seitenansicht gezeigte Holzscheibe eines Bauelementes, in deren untere und obere Scheibenflachseite voneinander beabstandete und achsparallel zueinander verlaufende Längsrillen vorgesehen sind,
- Fig. 4: eine in einer Seitenansicht dargestellte Holzscheibe, die hier aus zumindest einem im Inneren wenigstens eine Hohlkammer aufweisenden hölzernen Holzscheibenelement gebildet ist,

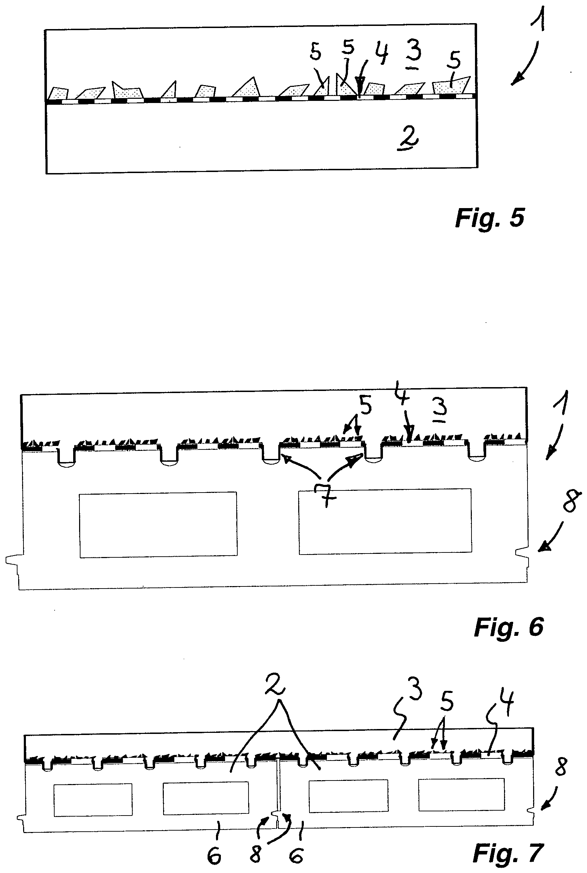

- Fig. 5: ein in einem Querschnitt dargestelltes und als Holz-Beton-Verbund gefertigtes Bauelement, ähnlich wie in Figur 1,
- Fig. 6: ein werksseitig bereits als Holz-Beton-Verbund vorgefertigtes und zur Erstellung eines mit Figur 1 vergleichbaren Bauelementes verwendbares Bauteilelement in einem Querschnitt, wobei die eine Betonplatte tragende Holzscheibe voneinander beabstandete und achsparallel zueinander verlaufende Längsrillen hat, deren Rillensohle gerundet ist,
- Fig. 7: ein als Deckenelement verwendbares und hier in einer Seitenansicht gezeigtes Bauelement, das eine aus zwei Holzscheibenelementen gebildete Holzscheibe sowie im oberen Bereich des Bauelementes eine vorzugsweise aus Ortbeton aufgetragene Betonplatte aufweist, wobei auf die obere, der Betonplatte zugewandte Scheibenflachseite der Holzscheibe eine Kunstharzschicht mit eingestreutem Granulat aufgetragen ist und wobei die Holzscheibe auf ihrer oberen Scheibenflachseite die voneinander beabstandeten und achsparallel zueinander verlaufenden Längsrillen hat,

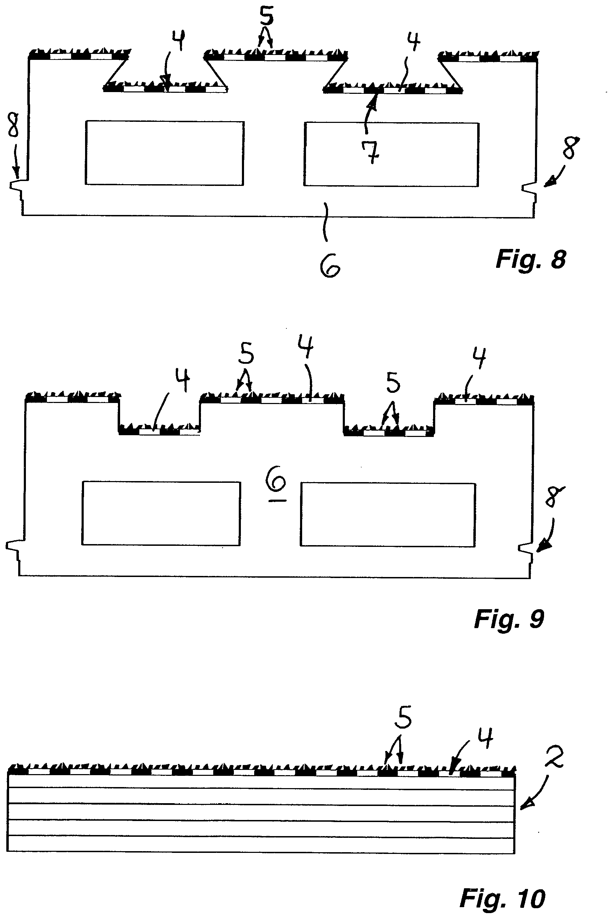

- Fig. 8: ein zur Erstellung einer Holzscheibe bestimmtes Holzscheibenelement, das an seiner oberen Scheibenflachseite ebenfalls die Längsrillen aufweist, die hier einen schwalbenschwanzförmigen Rillenquerschnitt haben, wobei das Holzscheibenelement in seinem Inneren zumindest eine und hier zwei Hohlkammern aufweist,
- Fig. 9: ein mit Figur 8 vergleichbares und hier quergeschnitten dargestelltes Holzscheibenelement mit im Querschnitt etwa rechtwinkligen Längsrillen,
- Fig. 10: eine aus Schichtholz für ein als Holz-Beton-Verbund herzustellendes Bauelement gemäß Figur 1, wobei die Schichten des für die Holzscheibe verwendeten Schichtholzes etwa parallel zur Scheibenebene verlaufen,

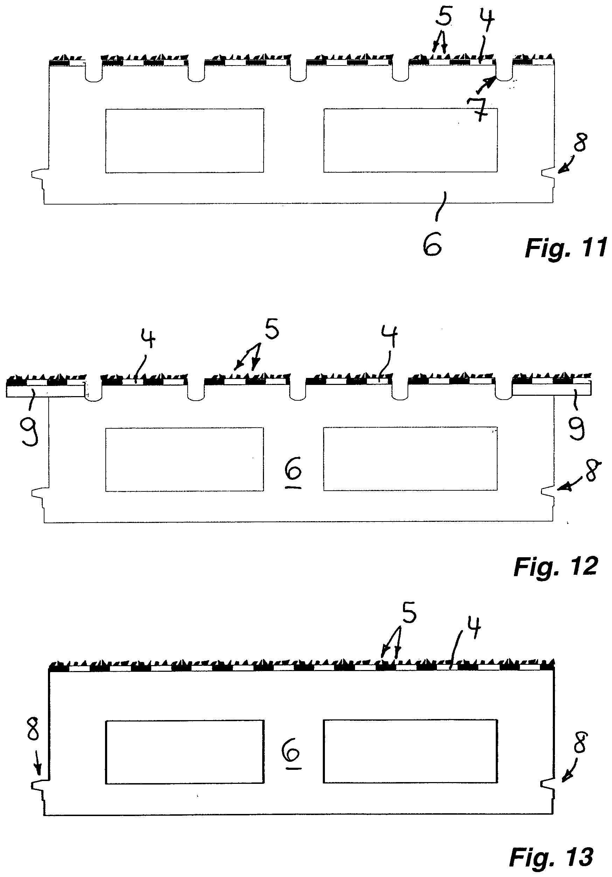

- Fig. 11: ein quergeschnitten dargestelltes Holzscheibenelement, das an seiner oberen Scheibenflachseite, auf die später eine Betonplatte, vorzugsweise aus Ortbeton aufzutragen ist, eine Mehrzahl von im Querschnitt etwa U-förmigen Längsrillen aufweist, wobei das Holzscheibenelement an seinen in Längsrichtung orientierten Schmalseiten mit Abstand von den oberen und unteren Randbereichen angeordnete Nut-/Feder-Verbindung hat, die jeweils mit einer korrespondierenden Nut-/Feder-Verbindung benachbarter anliegender Holzscheibenelemente zusammenwirken,
- Fig. 12: ein quergeschnitten gezeigtes Holzscheibenelement, an dessen Oberscheibenflachseite ein leistenförmiges Koppelelement übersteht, das mit seinem Überstand auf einem benachbarten Holzscheibenelement aufliegt und deren Trennlinie überdeckt, und wobei das Koppelelement zumindest an seinem einen Längsrand über den benachbarten Längsrand einer Längsrille vorsteht, und
- Fig. 13: ein zur Erstellung der Holzscheibe eines mit Figur 1 vergleichbaren Bauelementes benötigtes Holzscheibenelement, das in seinem Inneren zumindest eine und hier zwei Hohlkammern hat.

In den Figuren 1 und 5 bis 7 sind verschiedene Ausführungen eines Bauelementes 1 gezeigt, das beispielsweise als Deckenelement bei der Erstellung eines Gebäudes verwendbar ist. Das Bauelement 1 ist als Holz-Beton-Verbund hergestellt. Es weist eine als Basiselement dienende Holzscheibe 2 auf, auf die eine aus Ortbeton hergestellte Betonplatte 3 aufgetragen ist.

Dabei ist die Holzscheibe 2 flächig mit einer Schicht 4 aus Kunstharz verbunden, in welche Kunstharzschicht ein Granulat 5 eingestreut ist. Das Granulat 5 gibt der auf die Holzscheibe 2 aufgebrachten Kunstharzschicht, die zwischen der Holzscheibe 2 und der davon getragenen Betonplatte 3 angeordnet ist, eine rauhe Oberflächenstruktur. Die von der Betonplatte 3 ausgehenden Schubkräfte werden somit über die oberflächlich rauhe Kunstharzschicht 4 und das darin eingebettete Granulat 5, das beispielsweise Splitt sein kann, in die zugaufnehmende Holzscheibe 2 eingeleitet. Dabei werden die günstigen Materialeigenschaften des aus Holz hergestellten scheibenförmigen Basiselementes 2 vollständig genutzt und die als Basiselement dienende Holzscheibe 2 kann mit seiner gesamten Oberfläche zur Schubkraftübertragung genutzt werden. Dabei verankert sich die nach Aufbringen des Ortbetons gebildete druckaufnehmende Betonplatte 3 kontinuierlich in dem Granulat 5 und nimmt die, bei dieser Bauweise gar nicht oder nur sehr gering auftretenden abhebenden Querzugkräfte ebenfalls mit auf. Da die flächig auf die Holzscheibe 2 aufgetragene Kunstharzschicht 4 die Holzscheibe 2 oberflächlich wasserdicht versiegelt, ist die Holzscheibe 2 bereits während der Bauphase witterungsbeständig und wasserunempfindlich. Durch Aufkleben der beispielsweise auch als Kunstharzleim ausgestalteten Kunstharzschicht 4 und das darin eingestreute Granulat 5 bildet sich aus der Beton-Druckzone und der Holz-Zugzone ein hoch belastbarer starrer Verbund, wobei nur eine sehr geringe Rückverformung der planmäßigen Überhöhung des beispielsweise als Holz-Beton-Verbunddecke dienenden fertigen Bauelementes 1 zu erwarten sind und die Kosten für Querzugverankerungen eingespart werden können.

Die auf der Holzscheibe 2 aufgebrachte Kunstharzschicht 4 schützt die Holzscheibe 2 auch vor einer unerwünschten Feuchtigkeitsaufnahme bei dem zur Erstellung der Betonplatte 3 erforderlichen Betoniervorgang sowohl bei der Vormontage im Werk als auch auf der Baustelle. Dabei wird ein Quellen und das spätere Schwinden der Holzscheibe 2 nach der Austrockungsphase des Ortbetons vermieden und die Holzscheibe 2 bleibt rissefrei.

In den Figuren 1, 3, 6 bis 9 und 11 bis 12 ist erkennbar, dass die Holzscheibe 2 oder die Holzscheibenelemente 6, die zur Erstellung der Holzscheibe 2 an ihren Schmalseiten aneinander angelegt und miteinander verbunden werden können, Längsrillen 7 aufweisen, die hier voneinander beabstandet sind und parallel zueinander verlaufen. Diese Längsrillen oder Längskanäle bilden Entwässerungskanäle, die sich über die volle Elementlänge erstrecken und die randseitig offen ausgebildet sind. In diesen Längsrillen 7 kann das Regenwasser während der Bauzeit schnell und vollständig abfließen. Auf diese Weise werden stehende Wasserlachen auf der während der Bauphase als Gehfläche dienenden oberen Scheibenflachseite der Holzscheibe 2 vermieden. Wie beispielsweise in den Figuren 6, 7, 11 und 12 veranschaulicht ist, weisen diese Längsrillen 7 eine Sohle auf, die nach unten halbschalenförmig ausgebildet ist. Diese halbschalenförmige und somit nahezu rohrförmig ausgebildete Sohle dieser im Querschnitt U-förmigen Längsrillen 7 können die Entwässerung der oberen Scheibenflachseite noch zusätzlich beschleunigen.

In den Figuren 1, 6 bis 9 und 11 bis 13 wird deutlich, dass die Holzscheibe 2 des beispielsweise in Figur 1 gezeigten Bauelementes auch aus einem brettförmigen Holzscheibenelement 6 hergestellt werden kann, wobei die Holzscheibenelemente 6 an ihren aneinander benachbarten Schmalrändern aneinander anliegen und miteinander verbunden sind. Dabei kann an diesen miteinander zu verbindenden Schmalseiten der benachbarten Holzscheibenelemente 6 auch eine Nut-/Feder-Verbindung 8 vorgesehen sein, die mit Abstand von den oberen und unteren Längsrändern dieser Holzscheibenelemente 6 vorgesehen sind, und die mit der Nut-/Feder-Verbindung 8 eines benachbarten Holzscheibenelementes 6 zusammenwirken.

In den Figuren 1 und 12 ist besonders gut erkennbar, dass an zumindest einem Längsrand eines solchen Holzscheibenelementes 6 auf dessen oberer Scheibenflachseite ein leistenförmiges Koppelelement 9 vorgesehen sein kann, das sich in Längsrichtung über die gesamte Länge des Holzscheibenelementes 6 erstreckt. Dieses leistenförmige Koppelelement 9 liegt - wie in Figur 12 erkennbar ist - auf der oberen Scheibenflachseite eines benachbarten Holzscheibenelementes 6 auf und überdeckt die Trennlinie zwischen diesen miteinander verbundenen Holzscheibenelementen 6. Das Koppelelement oder Koppelbrett 9 ist zur Verbindung der einzelnen, die Holzscheibe 2 bildenden Holzscheibenelemente 6 vorgesehen und kann auch leicht über den benachbarten Öffnungsrand einer angrenzenden Längsrille 7 vorstehen. Die Koppelbretter oder Koppelelemente 9 verhindern das Eindringen von Feuchtigkeit aus Regen- oder dem Betonwasser des Ortbetons in die Koppelfuge zwischen den benachbarten Holzscheibenelementen 6. Dadurch werden spätere Wasserflecken an der Unterseite einer Sichtdecke vermieden.

### Bezugszeichenliste

- 1: Bauelement
- 2: Holzscheibe
- 3: Betonplatte
- 4: Kunstharzschicht
- 5: Granulat
- 6: Holzscheibenelement
- 7: Längsrille
- 8: Nut-/Feder-Verbindung
- 9: Koppelbrett oder -element

## Patentansprüche

1. Verfahren zur Herstellung eines als Holz-Beton-Verbund (HBV) ausgebildeten Bauelementes (1), das eine unterseitige Holzscheibe (2) hat sowie im oberen Bereich eine Betonplatte (3) aufweist, wobei zwischen der Holzscheibe (2) und der Betonplatte (3) eine Kunstharzschicht (4) aus in Kunstharz eingebettetem Granulat (5) angeordnet ist, wobei die unterseitige Holzscheibe (2) in einem ersten Verfahrensschritt mit der Kunstharzschicht (4) beschichtet wird und wobei auf diese eine rauhe Oberflächenstruktur aufweisende Kunstharzschicht (4) die Betonplatte (3) aufgebracht ist, **dadurch gekennzeichnet, dass** nach dem flächigen Auftragen der Kunstharzschicht (4) auf die Holzscheibe (2) das Granulat (5) eingestreut wird, welches der Kunstharzschicht die rauhe Oberflächenstruktur gibt, und dass nach dem Aushärten der aus in Kunstharz eingebettetem Granulat (5) bestehenden und die Holzscheibe (2) oberflächlich wasserdicht versiegelnden Kunstharzschicht (4) die plattenförmige Betonschicht aus Ortbeton aufgebracht wird.

## Claims

1. Method for producing a structural element (1) which takes the form of a wood-concrete composite (WCC) and which has a bottom-side wooden panel (2) and comprises a concrete slab (3) in the upper region, wherein a synthetic resin layer (4) composed of granules (5) embedded in the synthetic resin is arranged between the wooden panel (2) and the concrete slab (3), wherein, in a first method step, the bottom-side wooden panel (2) is coated with the synthetic resin layer (4) and wherein the concrete slab (3) is applied to this synthetic resin layer (4), which has a rough surface structure, **characterized in that** the granules (5), which impart the rough surface structure to the synthetic resin layer, are scattered in after the areal application of the synthetic resin layer (4) to the wooden panel (2), and **in that** the slab-shaped concrete layer consisting of in situ concrete is applied after the hardening of the synthetic resin layer (4) which consists of granules (5) embedded in synthetic resin and which seals the wooden panel (2) superficially in a water-tight manner.

## Revendications

1. Procédé de production d'un élément de construction (1) réalisé sous la forme d'un composite de bois-béton (HBV), qui comporte une tranche de bois inférieure (2) ainsi qu'une plaque de béton (3) dans la région supérieure, dans lequel une couche de résine synthétique (4) composée de granulat (5) noyé dans de la résine synthétique est disposée entre la tranche de bois (2) et la plaque de béton (3), dans lequel dans une première étape du procédé on enduit la tranche de bois inférieure (2) avec la couche de résine synthétique (4), et dans lequel on dépose la plaque de béton (3) sur cette couche de résine synthétique (4) qui présente une structure de surface rugueuse, **caractérisé en ce que**, après le dépôt en surface de la couche de résine synthétique (4) sur la tranche de bois (2), on y disperse le granulat (5), qui confère à la couche de résine synthétique la structure de surface rugueuse, et **en ce que**, après le durcissement de la couche de résine synthétique (4) composée de granulat noyé dans de la résine synthétique et qui obture de façon étanche à l'eau en surface la tranche de bois (2), on dépose la couche de béton sous la forme d'une plaque en béton coulé sur place.
